# FASCICULE DE BREVET EUROPEEN

(11) **EP 0 798 185 B1**
(45) Date de publication et mention de la délivrance du brevet: **06.12.2000**
(21) Numéro de dépôt: 97400707.2
(22) Date de dépôt: 27.03.1997
(51) Int. Cl.: B60S 1/34, F16B 41/00

(54) **Bras d'essuie-glace, notamment pour véhicule automobile**
Wischerarm für eine Scheibenwischeranlage,insbesondere für Kraftfahrzeuge
Windscreen-wiper arm, especially for motor vehicle

(30) Priorité: 29.03.1996 FR 9603963
(43) Date de publication de la demande: 01.10.1997
(73) Titulaire: VALEO SYSTEMES D'ESSUYAGE, 78321 La Verrière (FR)
(72) Inventeur: Lisiecki, Bruno, 92320 Chatillon (FR)
(74) Mandataire: Le Forestier, Eric

(56) Documents cités:
- DE-A- 4 408 733
- DE-B- 1 099 875
- FR-A- 2 640 211
- GB-A- 637 671

## Description

La présente invention concerne un bras d'essuie-glace, qui est destiné notamment à équiper un véhicule automobile.

Il s'agit d'un bras d'essuie-glace de type classique, comprenant un carter articulé sur un support mobile - couramment appelé tête - qui est destiné à être fixé au moyen d'un écrou sur la portion d'extrémité filetée d'un arbre de commande animé d'un mouvement pivotant de va-et-vient. La tête présente une ouverture autorisant le passage de cette extrémité ; l'ouverture a une forme conique qui s'emmanche, au moment de la fixation sur l'arbre, sur une portion conique de celui-ci attenante à l'extrémité filetée.

Traditionnellement, les bras d'essuie-glace sont des pièces fabriquées par des équipementiers et fournies aux constructeurs automobiles, qui en assurent la fixation sur l'arbre de commande.

Pour supprimer la manipulation de l'écrou au moment du montage, et favoriser l'automatisation du vissage, par visseuse automatique, il a déjà été proposé de prémonter l'écrou dans le bras, de manière imperdable.

Un système de ce genre est décrit par exemple dans le document FR-A-2 640 211, dont les figures 2 et 3 illustrent la configuration de l'écrou et de la tête destinée à le recevoir.

L'écrou possède une embase circulaire, en forme de rondelle, apte à être engagée par coulissement dans un logement entourant l'ouverture, ce logement ayant des rainures latérales formant glissières pour l'embase.

Après engagement, les rebords d'entrée des rainures sont déformés par écrasement, de manière à empêcher que l'écrou ne ressorte.

L'écrou est donc emprisonné dans son logement, coaxialement à l'ouverture.

Le bras est livré par l'équipementier au constructeur avec cet écrou prémonté.

Cette technique présente néanmoins un inconvénient lié au fait qu'il est nécessaire de procéder à une opération spéciale de blocage de l'écrou dans son logement, par martelage des bords d'entrée du logement. Cette opération additionnelle est nécessairement coûteuse.

Par ailleurs, pour une production de grande série, la mise en place de l'écrou se fait de manière automatisée, à l'aide d'un robot. Cette opération doit naturellement être faite avant l'opération de martelage des bords.

En cas de mauvaise synchronisation des deux opérations, notamment si le martelage des bords est fait avant la mise en place de l'écrou, cette mise en place ne peut plus se faire et il est nécessaire de mettre au rebut l'ensemble du bras.

C'est pourquoi, l'objectif de l'invention est de résoudre ce problème en proposant un dispositif dans lequel le prépositionnement de l'écrou se fasse d'une manière simple et sûre, l'écrou pouvant être enlevé puis remis en place correctement s'il se pose une difficulté au moment du montage.

L'invention a pour objet un bras d'essuie-glace qui comprend un carter articulé sur une tête destinée à être fixée au moyen d'un écrou à section externe polygonale sur la portion d'extrémité filetée d'un arbre de commande, la tête présentant une ouverture autorisant le passage de ladite extrémité filetée, et le carter étant apte à laisser passer un outil de vissage de l'écrou au droit de l'ouverture prévue dans la tête pour l'arbre de commande, bras dans lequel cet écrou est prémonté et retenu de manière imperdable.

L'objectif mentionné plus haut est atteint, conformément à l'invention, grâce au fait que l'écrou est emprisonné par frottement à l'intérieur d'un anneau de retenue fixé au bras de manière à pouvoir accompagner le mouvement de descente de l'écrou lors du vissage pour amener l'écrou contre la face supérieure de la tête.

Le vissage peut être effectué notamment à l'aide d'une visseuse automatisée.

Par ailleurs, selon un certain nombre de modes de réalisation avantageux, non limitatifs de l'invention :
- l'anneau présente une hauteur sensiblement inférieure à celle de l'écrou.
- l'anneau fait partie d'un élément de retenue possédant en outre au moins deux ailes en saillie extérieurement à partir de l'anneau et guidées verticalement dans des glissières solidaires de la tête au voisinage de l'ouverture pour l'arbre de commande.
- lesdites glissières sont réalisées d'un seul tenant avec la tête.
- les ailes de l'élément de retenue sont retenues dans leurs glissières avec frottement.
- le carter présente une ouverture pour l'outil de vissage, et l'anneau fait partie d'un élément de retenue possédant en outre au moins deux ailes en saillie extérieurement à partir de l'anneau et fixées au carter au voisinage de ladite ouverture pour l'outil de vissage, cette fixation pouvant être rompue sous l'effet d'une sollicitation.
- lesdites ailes sont fixées sur une face interne dudit carter.

D'autres caractéristiques et avantages de l'invention apparaîtront de la description et des dessins annexés, qui en représentent à titre d'exemple non limitatif, un mode de réalisation préféré.

Sur ces dessins :
- la figure 1 est une vue générale partielle et schématique d'un bras d'essuie-glace selon un premier mode de réalisation de l'invention, et plus précisément de la partie du bras située du côté de son arbre de commande, la vue étant une vue schématique en coupe longitudinale, le plan de coupe passant par l'axe de l'arbre de commande ; dans la situation représentée, le bras est simplement placé au-dessus de l'arbre de commande, mais n'a pas encore été positionné sur celui-ci;
- la figure 2 est une vue de dessus partiellement en coupe du bras de la figure 1;
- la figure 3 est une vue analogue à la figure 1, avec le bras positionné sur l'arbre de commande;
- la figure 4 est une vue en bout et en coupe partielle du bras et de l'arbre dans la position de la figure 3;
- la figure 5 est une vue analogue à la figure 3, après vissage de l'écrou; et
- la figure 6 est une vue analogue à la figure 2, d'une variante de réalisation;
- les figure 7 est une vue de dessus partiellement en coupe d'un bras d'essuie-glace selon une deuxième forme de réalisation de l'invention;
- la figure 8 est une vue en coupe longitudinale du bras de la figure 7, après positionnement sur l'arbre de commande;
- les figures 9 et 10 sont des vues en coupe logitudinale en cours et en fin de vissage de l'écrou; et
- les figures 11 à 14 sont des vues respectivement de face, de dessus, de côté et en perspective d'un élément de retenue faisant partie de la deuxième forme de réalisation de l'invention.

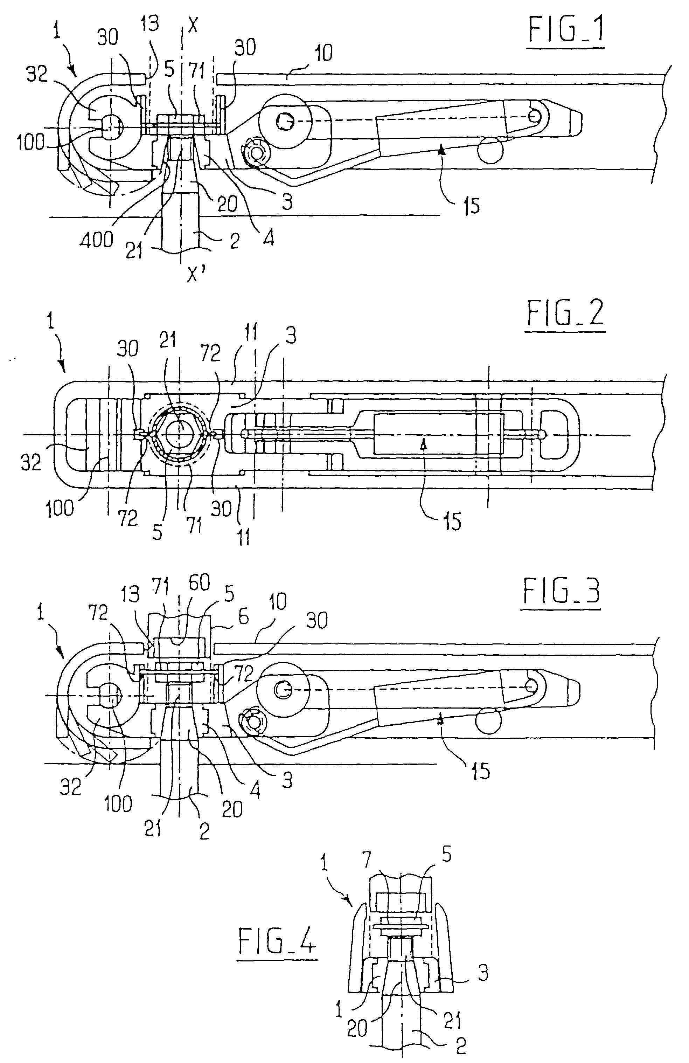

De manière bien connue, le bras d'essuie-glace représenté sur les figures 1 à 5, et qui est destiné à équiper un véhicule automobile, comprend un carter 1 sur lequel est monté un balai non représenté, supporté par la partie droite arrachée (non visible) des figures 1 et 2.

Le carter 1 présente, en coupe transversale, la forme générale d'un "U" renversé, dont la partie supérieure porte la référence 10, et les joues latérales la référence 11.

L'extrémité du carter, côté arbre de commande, est recourbée et est désignée 12.

A ce niveau, le carter porte un axe transversal 100 par lequel il est articulé, de manière démontable, sur une pièce 32 qui en coupe transversale affecte la forme générale d'un "C".

La pièce 32 fait partie d'un corps en matière plastique, ou tête 3, qui supporte également un système de rappel élastique 15 relié au carter et logé dans ce dernier. Ce système 15, de type connu, permet en cours d'utilisation d'appliquer le balai contre le pare-brise ou la glace arrière du véhicule. Il est néanmoins possible de relever le bras 1 en le faisant pivoter autour de l'axe 100, à l'encontre de la force du système élastique 15.

Toujours de manière bien connue, la tète 3 est surmoulée sur un insert métallique 4 présentant une ouverture 400 de forme tronconique, à faible conicité, dont le sommet est dirigé vers le Fond 10 du carter, ce qui correspond à la partie supérieure de la figure 1.

L'insert 4 est destiné à permettre le montage du bras sur l'extrémité d'un arbre de commande 2, à mouvement de va-et-vient pivolant.

A cet effet, l'arbre 2 présente, dans sa partie d'extrémité, une portion tronconique 20 destinée à s'emboîter dans l'ouverture 400, cette portion se prolongeant par une partie filetée 21.

La fixation est réalisée au moyen d'un écrou 5, qui - conformément à l'invention - est prémonté dans le bras et est livré avec celui-ci.

L'écrou 5 est un écrou hexagonal classique.

Par ailleurs, la paroi supérieure 10 du carter 1 possède en surplomb de l'ouverture 400 de la tête, une ouverture 13 destinée à permettre le vissage et le serrage de l'écrou 5 alors que le carter 1 est en position refermée, cette opération étant effectuée à l'aide d'une visseuse automatique dont la tête 6 avec empreinte hexagonale 60 est représentée sur la figure 3.

Selon l'invention, l'écrou 5 est prépositionné dans le bras à l'aide d'un élément de retenue 70, réalisé de préférence en matière plastique, qui comprend un anneau circulaire mince 71 et deux ailes 72 en forme de tiges s'étendant radialement vers l'extérieur, en deux positions diamétralement opposées, à partir dudit anneau.

Il est prévu par ailleurs deux chandelles 30 formant glissières, de section en forme générale de U qui s'étendent en direction de la paroi 10 du carter 1, parallèlement à l'axe XX' de l'ouverture 400 pour l'arbre de commande et dans des positions diamétralement opposées, et qui sont en l'espèce venues de matière avec la matière plastique de la tête 3.

Ces deux glissières 30 ont pour objet de recevoir les ailes 72 de l'élément de retenue 70, de manière à autoriser l'ensemble constitué de l'élément 70 et de l'écrou qu'il retient à coulisser verticalement.

La mise en place de l'écrou sur le carter 10 se fait de manière très simple et peu coûteuse chez l'équipementier, en insérant à force l'écrou 5 à l'intérieur de l'anneau 71 de l'élément 70, et en glissant les deux ailes 72 de l'élément 70 dans leurs glissières pour amener l'écrou 5 contre la face supérieure de la tête (voir figure 1). On notera ici que, pout maintenir ce prépositionnement de l'écrou avec une stabilité suffisante, on fait en sorte qu'il existe un certain degré de retenue par frottement entre les ailes 72 et les glissières 30.

Ainsi l'écrou 5 se trouve correctement positionné dans l'axe **X X'** du trou conique 400, en position d'attente pour la fixation.

Le bras et son écrou peuvent ainsi être manipulés ensemble, pour être livrés au fabricant automobile, et placés sur la chaîne de montage.

Le montage se fait, au moyen de la vissseuse 6, apte à s'engager à travers l'ouverture 13 du carter 1.

Au début de l'opération, le bras est placé sur l'extrémité de l'arbre 2 de telle manière que l'insert métallique 4 s'emmanche, par son ouverture tronconique 400, sur la portion 20 de l'arbre. Au cours de ce mouvement, l'élément de retenue 70 portant l'écrou 5 glisse vers le haut le long des glissières 30, pour arriver à la situation illustrée sur la figure 3, sous l'action du sommet de l'arbre de commande 2.

L'écrou 5 se trouve alors immédiatement au-dessus de la portion filetée 21 et l'opération de vissage peut commencer.

Naturellement, la hauteur des chandelles 30 est suffisante pour que ce positionnement de l'écrou soit possible.

Au cours de l'opération de vissage, l'outil 6 descend pour venir en prise avec la tête hexagonale de l'écrou 5, et est mis en rotation. A un certain stade, selon le degré de frottement entre l'écrou 5 et l'anneau 71, ce dernier est chassé vers le bas par la visseuse. Dans le même temps, l'écrou 5 lors de sa rotation frotte contre la surface interne de l'anneau 71, l'élément 70 étant bloqué par ses ailes contre toute rotation.

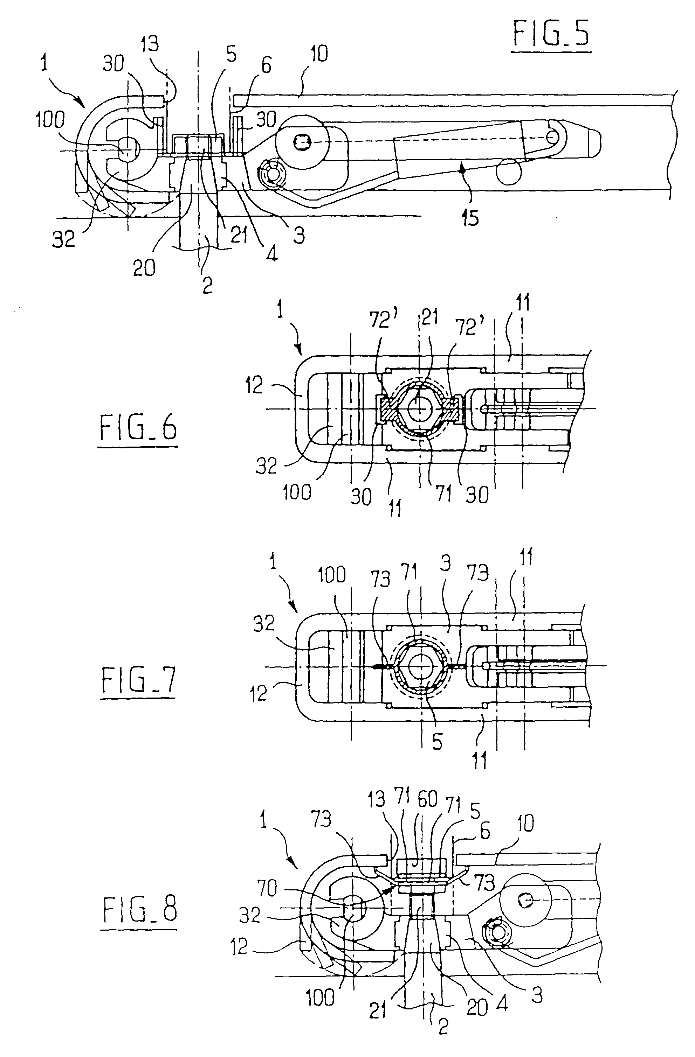

En fin d'opération, l'écrou 5 se trouve vissé à fond sur la partie 21, et le bras est par conséquent complètement solidaire de son arbre d'entraînement 2 (voir figure 5).

On notera que l'ouverture 13 peut avantageusement être refermée à l'issue du montage, au moyen d'un bouchon obturateur approprié, par exemple en matière plastique.

La figure 6 illustre une variante de réalisation de l'invention, dans laquelle les ailes en forme de tiges 72 sont remplacées par des ailes plates 72', la forme des chandelles 30 issues de la tête 3 étant élargie en conséquence.

En référence maintenant aux figures 7 à 14, on a représenté une seconde forme de réalisation de l'invention, dans laquelle l'élément de retenue 70 comporte un anneau 71, jouant le même rôle que précédemment, et deux ailes diamétralement opposées 73 qui sont non plus montées sur des glissières 30, mais fixées sur la face intérieure de la paroi de dessus 10 du carter 1.

Cette fixation, telle qu'un collage, un soudage ou un encastrement à force, est effectuée de manière à ce que, sous l'action de la poussée exercée verticalement sur l'élément 70 par la visseuse 6, les ailes se séparent du carter.

Ainsi la figure 8 montre la position initiale de l'écrou 5 et de l'élément de retenue 70 sur le bras. La position initiale de l'écrou est surélevée par rapport à la tête 3 de manière que le bras puisse être mis en place sur l'arbre de commande 2 et qu'après cette mise en place, l'écrou se retrouve sensiblement au sommet de la partie filetée 21, et sensiblement centrée sur celle-ci.

Le vissage à l'aide de la visseuse 6 commence alors, et au début du vissage, les ailes 73 sont rompues au niveau de leur liaison avec le carter 1 pour libérer totalement l'écrou 5.

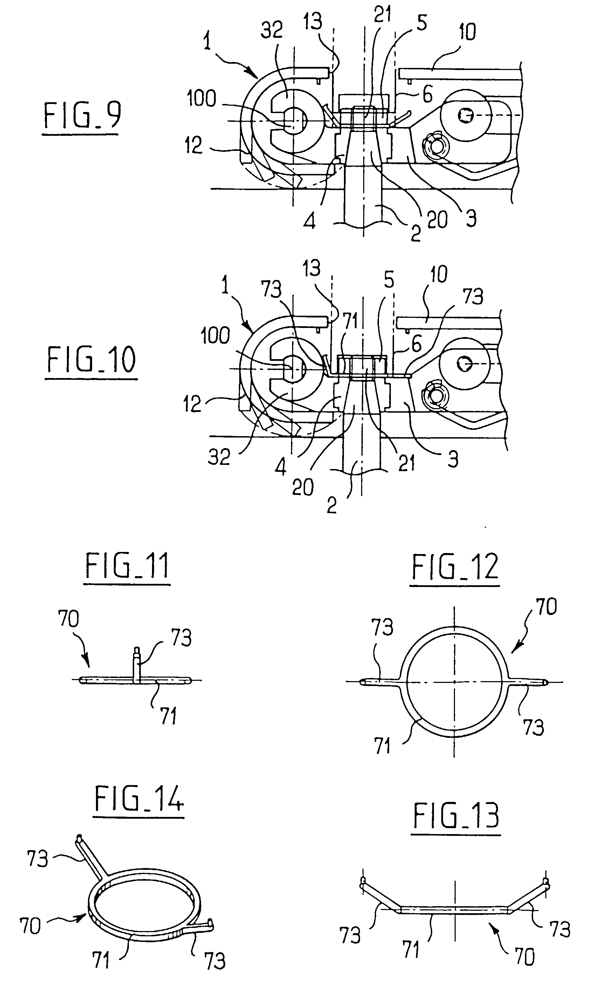

Le vissage se poursuivant (figures 9 et 10), les ailes 73, suffisamment déformables, ne font pas obstacle au mouvement de descente de l'écrou, que l'élément 70 accompagne, au cours du vissage.

L'élément 70 de cette seconde forme de réalisation est illustré en détail sur les figures 11 à 14.

Il va de soi que la présente invention s'applique également à des configurations dans lesquelles l'axe 100 et le balai sont tous deux situés du même côté de l'axe **X X'** (comme dans le FR-A-2 640 211 déjà cité, par exemple).

Dans ce cas, le passage de l'outil 6 ne se fait pas à travers le carter 10, puisque celui-ci n'est pas présent au niveau de l'axe **X X'**.

Il peut se faire par exemple à travers un carter auxiliaire recouvrant la tête à ce niveau.

La première forme de réalisation de l'invention convient indifféremment que ce carter auxiliaire comporte une ouverture pour la visseuse, ou qu'il puisse être ouvert complètement pour dégager l'écrou et effectuer le vissage.

La seconde forme de réalisation convient pour le cas où le carter auxiliaire est pourvu d'une ouverture pour la visseuse.

## Revendications

1. Bras d'essuie-glace qui comprend un carter (1) articulé sur une tête (3) destinée à être fixée au moyen d'un écrou (5) à section externe polygonale sur la portion d'extrémité filetée (21) d'un arbre de commande (2), la tête présentant une ouverture (400) autorisant le passage de ladite extrémité filetée, et le carter étant apte à laisser passer un outil (6) de vissage de l'écrou au droit de l'ouverture prévue dans la tête pour l'arbre de commande, bras dans lequel cet écrou est prémonté et retenu de manière imperdable, caractérisé par le fait que l'écrou est emprisonné par frottement à l'intérieur d'un anneau de retenue (71) fixé au bras de manière à pouvoir accompagner le mouvement de descente de l'écrou (5) lors du vissage pour amener l'écrou contre la face supérieure de la tête (3).

2. Bras d'essuie-glace selon la revendication 1, caractérisé par le fait que l'anneau (71) présente une hauteur sensiblement inférieure à celle de l'écrou (5).

3. Bras selon l'une des revendications 1 et 2, caractérisé par le fait que l'anneau (71) fait partie d'un élément de retenue (70) possédant en outre au moins deux ailes (72; 72') en saillie extérieurement à partir de l'anneau et guidées verticalement dans des glissières (30) solidaires de la tête (3) au voisinage de l'ouverture (400) pour l'arbre de commande (2).

4. Bras d'essuie-glace selon la revendication 3, caractérisé par le fait que lesdites glissières (30) sont réalisées d'un seul tenant avec la tête (3).

5. Bras d'essuie-glace selon l'une des revendications 3 et 4, caractérisé par le fait que les ailes (72) de l'élément de retenue (70) sont retenues dans leurs glissières (30) avec frottement.

6. Bras d'essuie-glace selon l'une des revendications 1 et 2, caractérisé par le fait que le carter (1) présente une ouverture (13) pour l'outil de vissage (6), et par le fait que l'anneau (71) fait partie d'un élément de retenue (70) possédant en outre au moins deux ailes (73) en saillie extérieurement à partir de l'anneau et fixées au carter (1) au voisinage de ladite ouverture (13) pour l'outil de vissage, cette fixation pouvant être rompue sous l'effet d'une sollicitation.

7. Bras d'essuie-glace selon la revendication 6, caractérisé par le fait que lesdits ailes (73) sont fixées de façon frangible sur une face interne dudit carter (1).

## Patentansprüche

1. Scheibenwischerarm, der einen gehäuseartigen Gelenkteil (1) umfaßt, der an einem Kopf (3) angelenkt ist, der dazu bestimmt ist, mittels einer Mutter (5) mit vieleckigem Außenquerschnitt an dem mit einem Gewinde versehenen Endabschnitt (21) einer Antriebswelle (2) befestigt zu werden, wobei der Kopf eine Öffnung (400) aufweist, die den Durchgang des besagten Gewindeendes ermöglicht, und wobei durch den gehäuseartigen Gelenkteil ein Schraubwerkzeug (6) zum Verschrauben der Mutter in Höhe der für die Antriebswelle im Kopf vorgesehenen Öffnung hindurchgeführt werden kann, wobei diese Mutter im Wischerarm vormontiert und unverlierbar gehalten ist, **dadurch gekennzeichnet**, daß die Mutter im Innern eines Halterings (71) reibschlüssig gesichert ist, der so am Wischerarm befestigt ist, daß er die Abwärtsbewegung der Mutter (5) beim Verschrauben begleiten kann, um die Mutter gegen die Oberseite des Kopfes (3) zu führen.

2. Scheibenwischerarm nach Anspruch 1, **dadurch gekennzeichnet**, daß der Ring (71) eine Höhe aufweist, die deutlich kleiner als die der Mutter (5) ist.

3. Scheibenwischerarm nach einem der Ansprüche 1 und 2, **dadurch gekennzeichnet**, daß der Ring (71) zu einem Halteelement (70) gehört, das außerdem wenigstens zwei Flügel (72; 72') besitzt, die vom Ring aus außen vorstehen und vertikal in Gleitführungen (30) geführt sind, die fest mit dem Kopf (3) in der Nähe der Öffnung (400) für die Antriebswelle (2) verbunden sind.

4. Scheibenwischerarm nach Anspruch 3, **dadurch gekennzeichnet**, daß die besagten Gleitführungen (30) einstückig mit dem Kopf (3) ausgeführt sind.

5. Scheibenwischerarm nach einem der Ansprüche 3 und 4, **dadurch gekennzeichnet**, daß die Flügel (72) des Halteelements (70) in ihren Gleitführungen (30) reibschlüssig gehalten sind.

6. Scheibenwischerarm nach einem der Ansprüche 1 und 2, **dadurch gekennzeichnet**, daß der gehäuseartige Gelenkteil (1) eine Öffnung (13) für das Schraubwerkzeug (6) aufweist und daß der Ring (71) zu einem Halteelement (70) gehört, das außerdem wenigstens zwei Flügel (73) besitzt, die vom Ring aus außen vorstehen und am gehäuseartigen Gelenkteil (1) in der Nähe der besagten Öffnung (13) für das Schraubwerkzeug befestigt sind, wobei diese Befestigung unter der Einwirkung einer Beanspruchung abgebrochen werden kann.

7. Scheibenwischerarm nach Anspruch 6, **dadurch gekennzeichnet**, daß die besagten Flügel (73) an einer Innenfläche des besagten gehäuseartigen Gelenkteils (1) abbrechbar befestigt sind.

## Claims

1. A screen wiper arm which comprises a housing (1) articulated on a head (3) which is adapted to be fixed on the threaded end portion (21) of a driving spindle (2) by means of a nut (5) having an external polygonal cross section, the head having an aperture (400) for passage of the said threaded end portion, and the housing being adapted to allow a tool (6) for screwing the nut to pass through in line with the aperture formed in the head for the driving spindle, wherein the said nut is fitted beforehand and held so that it cannot be lost,
characterised by the fact that the nut is trapped by friction inside a retaining ring (71) fixed to the arm so that it can accompany the descending movement of the nut (5) during screwing, so as to bring the nut against the top face of the head (3).

2. A screen wiper arm according to Claim 1, characterised by the fact that the ring (71) has a height substantially smaller than that of the nut (5).

3. An arm according to Claim 1 or Claim 2, characterised by the fact that the ring (71) is part of a retaining element (70) which also has at least two wing portions (72; 72'), which project externally from the ring and are guided vertically in slides (30) fixed to the head (3) in the vicinity of the aperture (4) for the driving spindle (2).

4. A screen wiper arm according to Claim 3, characterised by the fact that the said slides (30) are formed integrally with the head (3).

5. A screen wiper arm according to Claim 3 or Claim 4, characterised by the fact that the wing portions (72) of the retaining element (70) are held in their slides (30) with friction.

6. A screen wiper arm according to Claim 1 or Claim 2, characterised by the fact that the housing (1) has an aperture (13) for the screwing tool (6), and by the fact that the ring (71) is part of a retaining element (70) which also has at least two wing portions (73) projecting externally from the ring and fastened to the housing (1) in the vicinity of the said aperture (13) for the screwing tool, this fastening being rupturable under an applied force.

7. A screen wiper arm according to Claim 6, characterised by the fact that the said wing portions (73) are fastened frangibly on an inner face of the said housing (1).
